# EUROPÄISCHE PATENTSCHRIFT

(11) **EP 0 945 959 B1**
(45) Veröffentlichungstag und Bekanntmachung des Hinweises auf die Patenterteilung: **26.02.2014**
(21) Anmeldenummer: 98123684.7
(22) Anmeldetag: 11.12.1998
(51) Int. Cl.: H02J 7/14

(54) **Vorrichtung zur Spannungsversorgung in einem Kraftfahrzeug**
Device for supplying power in a motor vehicle
Dispositif d'alimentation de tension pour un véhicule automobile

(30) Priorität: 26.03.1998 DE 19813369
(43) Veröffentlichungstag der Anmeldung: 29.09.1999
(73) Patentinhaber: ROBERT BOSCH GMBH, 70442 Stuttgart (DE)
(72) Erfinder: Frey, Wunibald, 71701 Schwieberdingen (DE); Geiger, Albert, 71735 Eberdingen (DE); Pesch, Michael, 71701 Schwieberdingen (DE)

(56) Entgegenhaltungen:
- EP-A- 0 753 925
- DE-A- 19 517 742
- DE-A- 19 628 222

## Beschreibung

Die Erfindung geht aus von einer Vorrichtung zur Spannungsversorgung in einem Kraftfahrzeug nach der Gattung des Anspruchs 1.

### Stand der Technik

Die Spannungsversorgung in einem Kraftfahrzeug mit einer Vielzahl von elektrischen Verbrauchern wird heute teilweise mit Hilfe zweier Batterien realisiert, die von einem Generator geladen werden. Die beiden Batterien stehen dabei über ein Bordnetzsteuergerät miteinander in Verbindung. Das Bordnetzsteuergerät umfaßt Schaltmittel, über die die Verbindung zwischen den beiden Batterien je nach Bedarf geschlossen oder geöffnet werden kann. Jede Batterie bildet gemeinsam mit den mit ihr verbindbaren Verbrauchern einen eigenen Versorgungskreis. Es ist dabei üblich, daß mit einer Batterie die üblichen Bordnetzverbraucher sowie die Verbraucher, die für den Betrieb der Brennkraftmaschine unbedingt erforderlich sind, in Verbindung stehen, während die andere Batterie hauptsächlich zur Versorgung des Starters dient. Damit eine optimale Spannungsversorgung insbesondere für die Verbraucher, die unbedingt benötigt werden, sichergestellt wird, ist es in einem aus der

DE-OS 196 28 222 bekannten Spannungsversorgungssystem möglich, diese Verbraucher entweder mit der einen oder der anderen Batterie zu verbinden. Üblicherweise liegen diese Verbraucher an der Hauptbatterie, sie können jedoch bei einer zu starken Entladung der Hauptbatterie auch auf die Starterbatterie umgeschaltet werden. Die Umschaltmittel sind dabei auf der Seite der Starterbatterie als Halbleiterschalter realisiert, während auf der Seite der Hauptbatterie ein Relais als Umschaltmittel dient. Dieses Relais ist als Relais mit Wechselkontakt ausgestaltet, über das die betriebsrelevanten Verbraucher entweder mit der Hauptbatterie verbindbar sind, wobei diese Verbindung über den Ruhekontakt erfolgt oder mittels des Arbeitskontaktes direkt auf die Starterbatterie umgeschaltet werden können, dieser Fall entspricht dann einem Notbetrieb.

### Vorteile der Erfindung

Die erfindungsgemäße Vorrichtung zur Spannungsversorgung in einem Kraftfahrzeug mit den Merkmalen des Anspruchs 1 hat den Vorteil, daß die Dauerversorgung der betriebsrelevanten Verbraucher zuverlässig und mit einfachen Mitteln gewährleistet werden kann. Die auftretende Verlustleistung kann sehr gering gehalten werden, und die eingesetzten Bauteile können einfach und kompakt sein. Dies gilt besonders für das einzusetzende Relais, das obwohl es Ströme bis zu 40 A zu bewältigen hat, einfach aufgebaut sein kann.

Erzielt werden diese Vorteile, indem bei einer Vorrichtung zur Spannungsversorgung in einem Kraftfahrzeug gemäß dem Oberbegriff des Anspruchs 1 anstelle eines Umschaltrelais ein einfaches Relais mit nur einem Arbeitskontakt eingesetzt wird. Gleichzeitig werden auf der Seite der Starterbatterie als Schalt- bzw. Umschaltmittel gesteuerte Halbleiter eingesetzt. Diese spezielle Anordnung stellt insgesamt eine vorteilhafte Kombination einer aus Halbleiterschaltern bestehenden Endstufe und einem Relais mit nur einem Arbeitskontakt dar, die vorteilhafterweise noch so ergänzt werden kann, daß die Endstufe zusätzlich zu den Halbleiterschaltern noch integrierte Wandler umfaßt, wodurch ein Zwei-Spannungs-Bordnetz realisierbar ist, das auch für unterschiedliche Spannungen funktionsfähig ist.

Weitere Vorteile der Erfindung werden durch die in den Unteransprüchen angegebenen Merkmale erzielt. Dabei ist es als besonders vorteilhaft anzusehen, daß die Vorrichtung zur Spannungsversorgung insgesamt in ein Steuergerät integriert sein kann, das zusätzlich zum Motorsteuergerät vorhanden ist und mit diesem über eine geeignete Verbindung, beispielsweise einem CAN-Bus Daten und Steuersignale austauscht. In einer anderen vorteilhaften Ausgestaltung der Erfindung wird die Leistungsendstufe fremdgesteuert, z. B. vom Motor-Steuergerät.

### Zeichnung

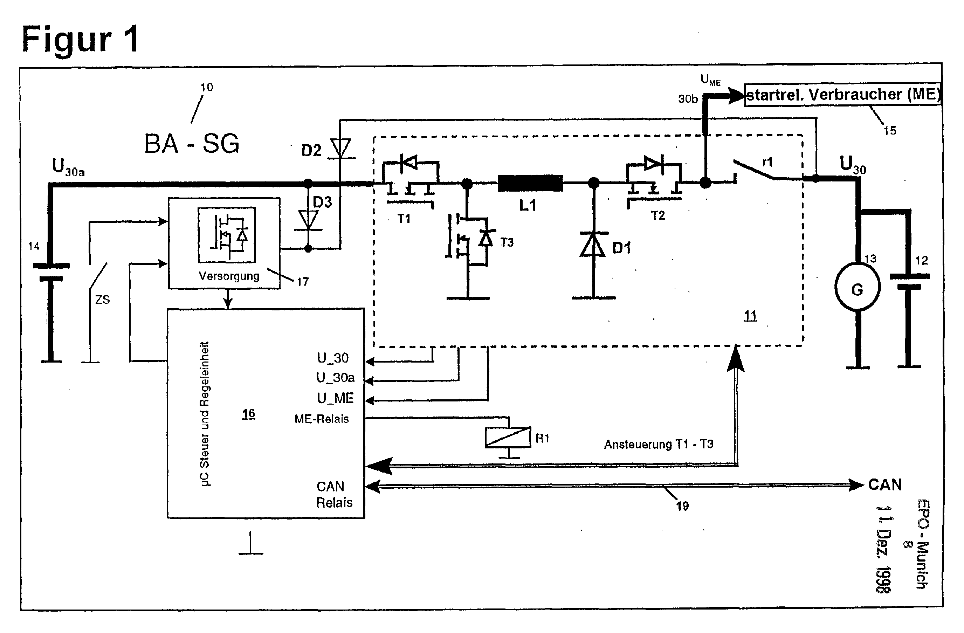

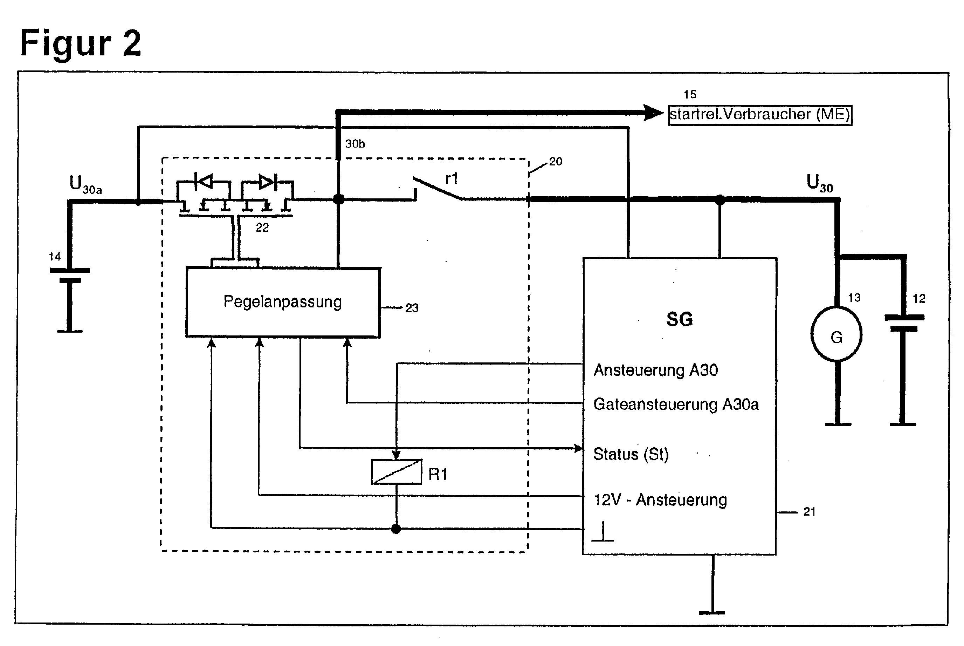

Zwei Ausführungsbeispiele der Erfindung sind in den Figuren 1 und 2 dargestellt und werden in der nachfolgenden Beschreibung näher erläutert.

### Beschreibung

In Figur 1 ist ein Ausführungsbeispiel der Erfindung dargestellt, das ein Leistungsbordnetz mit einem kompletten Bordnetzsteuergerät 10 umfaßt. Dieses Bordnetzsteuergerät 10 umfaßt seinerseits das Relais r1 sowie den Halbleiterschalter 11, der die Transistoren T1, T2, T3 sowie die Spule L1 und die Diode D1 enthält. Die Feldeffekttransistoren T1 und T2 wirken als Schalter, der Transistor T3 sowie die Spule L1 dienen zur Spannungswandlung, sie müssen nicht unbedingt vorhanden sein. Das Bordnetzsteuergerät 10 hat die Anschlüsse 30, 30a und 30b. Der Anschluß 30 steht mit der Versorgungs- bzw. Bordnetzbatterie 12 sowie mit dem Generator 13 in Verbindung, wobei die genaue Anordnung nur beispielhaft angegeben ist. An den Anschluß 30a ist die Starterbatterie 14 angeschlossen. Der nicht dargestellte Starter kann durch Schließen des Zündschalters ZS in Betrieb genommen werden. An den Anschluß 30b werden alle für den Betrieb des Fahrzeuges erforderlichen Verbraucher, die auch als startrelevante Verbraucher 15 bezeichnet werden, angeschlossen.

Zusätzlich zu den bisher erwähnten Bestandteilen weist das Bordnetzsteuergerät 10 eine mikrocomputergesteuerte Steuerund Regeleinheit 16 auf, die über eine Spannungsversorgungseinheit 17 versorgt wird. Die Spannungsversorgung der Spannungsversorgungseinheit 17 erfolgt alternativ über die Dioden D2 und D3, wobei die Diode D2 mit dem Anschluß 30 in Verbindung steht und die Diode D3 mit dem Anschluß 30a. Die Ansteuerung der Spannungsversorgungseinrichtung 17 erfolgt durch die Steuerund Regeleinheit 16. Dieser werden die Spannungen, die an den Klemmen 30, 30a und 30b anliegen, zugeführt. Die zugehörigen Spannungen sind als U30, U30a und UME bezeichnet. Das Relais R1 wird über den Anschluß ME-Relais von der Steuer- und Regeleinheit 16 angesteuert. Der Schalter des Relais R1 entspricht dem Schalter r1. Die Ansteuerung der Transistoren T1, T2 und T3 erfolgt ebenfalls durch die Steuer- und Regeleinheit 16. Über eine CAN-Busverbindung 19 ist das Bordnetzsteuergerät 10 bzw. die Steuer- und Regeleinheit 16 des Bordnetzsteuergerätes mit anderen Steuergeräten, unter anderem mit dem nicht dargestellten Motorsteuergerät verbunden, wobei die Steuergeräte Daten für steuer- und regelungstechnische Zwecke austauschen können.

Mit der in Figur 1 dargestellten Vorrichtung zur Spannungsversorgung läßt sich ein Zwei-Batterie-Bordnetz in der gewünschten Weise betreiben. Die Aufgabe des Bordnetzsteuergerätes 10 besteht darin, startrelevante bzw. für den Motorbetrieb unbedingt erforderliche Verbraucher 15 von der Versorgungsbatterie 12 über den Anschluß 30 zu versorgen. Wenn die Versorgungsbatterie 12, die vom Generator 13 geladen wird, durch Verbraucher, die auch im Stillstand eingeschaltet sind oder durch ungünstigen Fahrbetrieb so weit entladen ist, daß ein weiterer Startvorgang bzw. eine weitere Inbetriebnahme des Fahrzeugs nicht möglich ist, dann werden diese startrelevanten Verbraucher 15 aus der anderen Batterie 14 versorgt. Dazu muß das Bordnetzsteuergerät 10 die start- bzw. betriebsrelevanten Verbraucher 15 durch entsprechende Ansteuerung der Transistoren T1 und T2 über den Anschluß 30a auf die Batterie 14 durchschalten. Diese Durchschaltung kann während eines Notstarts für eine vorgebbare Zeitspanne, beispielsweise für eine Zeitspanne von fünf Minuten erfolgen. Damit ist es möglich, die Verbraucher für diese Zeitspanne aus der Starterbatterie 14 zu versorgen. Nach erfolgreichem Start kann der Generator 13 Leistung abgeben und damit den weiteren Betrieb bzw. die Spannungsversorgung gewährleisten. Während des Notstarts ist die Verbindung zwischen den Anschlüssen 30 und 30b durch das Relais R1 unterbrochen, die Schaltstrecke r1 ist also geöffnet. Dabei ist das Relais R1 nicht bestromt. Als Relais R1 wird also ein Relais eingesetzt, das ohne Bestromung geöffnet ist und nur durch Bestromung bzw. durch Anlegen einer Spannung eine Verbindung zwischen den Anschlüssen 30 und 30b bewirkt. Das Relais R1 kann beispielsweise ein Leiterplattenrelais sein, es befindet sich vorzugsweise im Steuergerät 10. Es kann gegebenenfalls auch außerhalb, beispielsweise in einem Relaiskasten untergebracht sein. Es kann dabei als Steckrelais ausgebildet sein.

Im Normalbetrieb erfolgt die Ansteuerung des Relais durch die Steuer- und Regeleinheit 16 so, daß die Relaisspule bestromt ist und damit der Relaisarbeitskontakt geschlossen ist; r1 stellt also eine leitende Verbindung zwischen Anschluß 30 und 30b her und ist Bestandteil des Relais R1. Die startrelevanten Verbraucher 15 liegen dann an der Versorgungsbatterie 12. Gleichzeitig sorgt das Bordnetzsteuergerät 10 durch geeignete Ansteuerung der Transistoren T1 und T2 für die Nachladung der Batterie 14. Diese Nachladung erfolgt über den Anschluß 30, über den im Normalbetrieb die vom Generator 13 erzeugte elektrische Leistung zugeführt wird.

Da die Versorgung der Motorelektronik und damit der startrelevanten Verbraucher 15 im Normalbetrieb hohe Ströme erfordert, beispielsweise 40 A, ist es erforderlich, ein Relais einzusetzen, das solche Ströme führen kann. Dazu wird hier ein Relais mit Arbeitskontakt eingesetzt, das Relais ist also so ausgestaltet, daß es nur einen Arbeitskontakt hat und daher eine Verbindung entweder öffnet oder schließt.

Damit die Starterbatterie 14 bzw. ein geeignet ausgestalteter Startspeicher nach dem Startvorgang schnell wieder nachgeladen werden kann, kann zusätzlich zwischen die Anschlüsse 30 und 30a noch ein Spannungswandler (DC/DC-Wandler) geschaltet werden. Ein solcher Spannungswandler weist zusätzlich einen Transistor T3 und eine Spule bzw. Drossel L1 auf. Durch geeignete Ansteuerung der Transistoren T1 und T3 läßt sich die Spannungswandlung durchführen. Der Spannungswandler ist jedoch nicht zwingend erforderlich, der Transistor T3 und die Drossel bzw. Spule L1 sind daher als Option anzusehen. Der Einsatz eines Spannungswandlers ermöglicht auch den Aufbau eines Zweispannungsbordnetzes mit z. B. 12 V und 36 V.

In Figur 2 ist ein weiteres Ausführungsbeispiel der Erfindung dargestellt, wobei dieses Ausführungsbeispiel einem Leistungsbordnetz mit einer Leistungsendstufe mit Fremdsteuerung entspricht. Im Gegensatz zum Ausführungsbeispiel nach Figur 1 ist kein eigenes Bordnetzsteuergerät vorhanden. Die Endstufe ist separiert und nur diese in einem eigenen Gehäuse 20 untergebracht. Die Ansteuerung erfolgt hier von einem im Fahrzeug ohnehin schon vorhandenen Steuergerät, also insbesondere vom Motorsteuergerät 21. Die Endstufe selbst umfaßt wiederum die Halbleiter, die über den Anschluß 30a auf die Starterbatterie 14 führen sowie die Schaltstrecke r1 des Relais R1. Das Steuergerät 21 steht sowohl mit dem Anschluß 30 als auch mit dem Anschluß 30a in Verbindung. Der Anschluß 30b liegt zwischen den Halbleitern 22 und dem Relais r1. An diesen Anschluß 30b sind wiederum die startrelevanten Verbraucher 15 angeschlossen. Zusätzlich ist noch eine Pegelanpassung 23 vorhanden, die den Spannungspegel an den Halbleitern 22 sowie den Spannungspegel am Anschluß 30b beeinflussen kann. Die Ansteuerung des Relais R1 sowie der Pegelanpassung erfolgt jeweils vom Steuergerät 21, wobei die Relaisansteuerung als Ansteuerung A30 bezeichnet ist und die Pegelanpassungen als Gateansteuerungen A30a sowie 12 V Ansteuerung. Von der Pegelanpassung 23 wird das Steuergerät der jeweilige Status mitgeteilt. Die in Figur 2 dargestellte Vorrichtung zur Spannungsversorgung kann gegebenenfalls ebenfalls eine Endstufe aufweisen, die um einen Spannungswandler ergänzt wird, der wie beim Ausführungsbeispiel nach Figur 1 integrierbar ist.

## Patentansprüche

1. Vorrichtung zur Spannungsversorgung eines Kraftfahrzeuges, die ein Bordnetz aufweist, das wenigstens eine Versorgungsbatterie (12) und eine Starterbatterie (14) umfaßt, die miteinander über eine elektrische Schaltung verbindbar sind, die wenigstens eine Reihenschaltung eines Relais und eines Halbleiterschalters umfaßt, wobei der Verbindungspunkt zwischen dem Relais und dem Halbleiterschalter zu einem Anschluß führt, über den startrelevante elektrische Verbraucher mit Spannung versorgt werden, **dadurch gekennzeichnet, daß** das Relais (R1) ein Relais mit nur einem Arbeitskontakt ist und das Relais so angesteuert wird, daß es im normalen Betriebszustand bestromt wird und dabei eine leitende Verbindung zwischen der Versorgungsbatterie (12) und den startrelevanten Verbrauchern (15) herstellt.

2. Vorrichtung zur Spannungsversorgung in einem Kraftfahrzeug nach Anspruch 1, **dadurch gekennzeichnet, daß** der Halbleiterschalter (11) wenigstens zwei Feldeffekttransistoren (T1 und T2) umfaßt, die ein bidirektionales Schaltelement bilden.

3. Vorrichtung zur Spannungsversorgung nach Anspruch 1 oder 2, **dadurch gekennzeichnet, daß** der Halbleiterschalter (11) zusätzlich einen Feldeffekttransistor (T3) und eine Drossel zusätzlich einen Feldeffekttransistor (T3) und eine Drossel (L1) umfaßt und die Transistoren (T1 und T3) so angesteuert werden, daß der Halbleiterschalter (11) als Gleichspannungswandler arbeitet.

4. Vorrichtung zur Spannungsversorgung in einem Kraftfahrzeug nach einem der vorhergehenden Ansprüche, **dadurch gekennzeichnet, daß** der Halbleiterschalter und das Relais Bestandteil eines Bordnetz-Steuergerätes sind, das einen als Steuer- und Regeleinheit dienenden Mikrocomputer umfaßt, der sowohl den Halbleiterschalter als auch das Relais ansteuert.

5. Vorrichtung zur Spannungsversorgung in einem Kraftfahrzeug nach einem der vorhergehenden Ansprüche, **dadurch gekennzeichnet, daß** das Bordnetzsteuergerät bzw. der Mikrocomputer des Bordnetzsteuergerätes einen digitalen Busanschluß, insbesondere CAN-Bus-Anschluß aufweist, der mit mindestens einem weiteren Steuergerät des Fahrzeuges in Verbindung steht.

6. Vorrichtung zur Spannungsversorgung in einem Kraftfahrzeug nach einem der Ansprüche 1 bis 3, **dadurch gekennzeichnet, daß** der Halbleiterschalter (11) und das Relais (R1, r1) eine Leistungsendstufe bilden, die von einem externen Ansteuermittel, insbesondere einem Motorsteuergerät angesteuert werden.

7. Vorrichtung zur Spannungsversorgung in einem Kraftfahrzeug nach Anspruch 6, **dadurch gekennzeichnet, daß** dem Halbleiterschalter (11) eine Pegelanpassung (23) zugeordnet ist, die das Potential an den Gateanschlüssen des Halbleiterschalters (11) und am Verbindungspunkt zwischen dem Halbleiterschalter und dem Relais (R1, r1) beeinflußt.

8. Vorrichtung zur Spannungsversorgung in einem Kraftfahrzeug nach einem der vorhergehenden Ansprüche, **dadurch gekennzeichnet, daß** die Dimensionierung des Halbleiterschalters (11) so erfolgt, daß er für eine vorgebbare Zeitspanne den gesamten Versorgungsstrom für die startrelevanten Verbraucher (15) übernehmen kann.

9. Vorrichtung zur Spannungsversorgung in einem Kraftfahrzeug nach einem der vorhergehenden Ansprüche, **dadurch gekennzeichnet, daß** die Leistungsendstufe mit dem Schalter (11), dem Relais (R1, r1) und gegebenenfalls dem Gleichspannungswandler von einem gemeinsamen Gehäuse umgeben sind, das eine Vielzahl von Anschlüssen zur Spannungsversorgung und zur Zuführung oder Abgabe von Steuersignalen aufweist.

## Claims

1. Apparatus for supplying voltage to a motor vehicle, which apparatus has an on-board supply system which comprises at least a supply battery (12) and a starter battery (14) which can be connected to one another by means of an electrical circuit which comprises at least one series circuit comprising a relay and a semiconductor switch, wherein the connection point between the relay and the semiconductor switch leads to a connection by means of which electrical loads which are relevant for starting are supplied with voltage, **characterized in that** the relay (R1) is a relay with only one working contact and the relay is driven such that it is supplied with current in the normal operating state and, in the process, establishes a conductive connection between the supply battery (12) and the loads (15) which are relevant for starting.

2. Apparatus for supplying voltage in a motor vehicle according to Claim 1, **characterized in that** the semiconductor switch (11) comprises at least two field-effect transistors (T1 and T2) which form a bidirectional switching element.

3. Apparatus for supplying voltage according to Claim 1 or 2, **characterized in that** the semiconductor switch (11) additionally comprises a field-effect transistor (T3) and a choke (L1), and the transistors (T1 and T3) are driven such that the semiconductor switch (11) operates as a DC voltage converter.

4. Apparatus for supplying voltage in a motor vehicle according to one of the preceding claims, **characterized in that** the semiconductor switch and the relay are constituent parts of an on-board supply system controller which comprises a microcomputer which serves as an open-loop and closed-loop control unit and which drives both the semiconductor switch and the relay.

5. Apparatus for supplying voltage in a motor vehicle according to one of the preceding claims, **characterized in that** the on-board supply system controller or the microcomputer of the on-board supply system controller has a digital bus connection, in particular a CAN bus connection, which is connected to at least one further controller of the vehicle.

6. Apparatus for supplying voltage in a motor vehicle according to one of Claims 1 to 3, **characterized in that** the semiconductor switch (11) and the relay (R1, r1) form a power output stage which is controlled by an external drive means, in particular a motor controller.

7. Apparatus for supplying voltage in a motor vehicle according to Claim 6, **characterized in that** the semiconductor switch (11) has an associated level adjustment means (23) which influences the potential at the gate connections of the semiconductor switch (11) and at the connection point between the semiconductor switch and the relay (R1, r1).

8. Apparatus for supplying voltage in a motor vehicle according to one of the preceding claims, **characterized in that** the semiconductor switch (11) is dimensioned such that it can carry the total supply current for the loads (15) which are relevant for starting for a prespecified period of time.

9. Apparatus for supplying voltage in a motor vehicle according to one of the preceding claims, **characterized in that** the power output stage comprising the switch (11), the relay (R1, r1) and possibly the DC voltage converter is surrounded by a common housing which has a large number of connections for supplying voltage and for feeding in or for emitting control signals.

## Revendications

1. Dispositif d'alimentation en tension d'un véhicule automobile, le dispositif présentant un réseau de bord qui comporte au moins deux batteries d'alimentation (12) et une batterie de démarrage (14) qui peuvent être reliées les unes aux autres par un circuit électrique qui comporte au moins le raccordement en série d'un relais et d'un commutateur semi-conducteur, le point de raccordement entre le relais et le commutateur semi-conducteur conduisant à une borne par laquelle les consommateurs électriques intervenant dans le démarrage sont alimentés en tension,
caractérisé en en ce que
le relais (R1) est un relais présentant un seul contact de travail et
en ce que le relais est commandé de telle sorte qu'en situation de fonctionnement normal, il est alimenté en courant et établit ainsi une liaison conductrice entre la batterie d'alimentation (12) et les consommateurs (15) intervenant dans le démarrage.

2. Dispositif d'alimentation en tension d'un véhicule automobile selon la revendication 1, **caractérisé en ce que** le commutateur à semi-conducteur (11) comporte au moins deux transistors à effet de champ (T1 et T2) qui forment un élément de commutation bidirectionnel.

3. Dispositif d'alimentation en tension selon les revendications 1 ou 2, **caractérisé en ce que** le commutateur semi-conducteur (11) comporte de plus un transistor (T3) à effet de champ et une bobine et **en ce que** les transistors (T1 et T3) sont commandés de telle sorte que le commutateur semi-conducteur (11) travaille comme convertisseur de tension continue.

4. Dispositif d'alimentation en tension d'un véhicule automobile selon l'une des revendications précédentes, **caractérisé en ce que** le commutateur semi-conducteur et le relais font partie d'un appareil de commande du réseau de bord qui comporte un microordinateur qui sert d'unité de commande et de régulation et qui commande à la fois le commutateur semi-conducteur et le relais.

5. Dispositif d'alimentation en tension d'un véhicule automobile selon l'une des revendications précédentes, **caractérisé en ce que** l'appareil de commande du réseau de bord ou le microordinateur de l'appareil de commande du réseau de bord présentent un raccordement de bus, en particulier un raccordement de bus CAN qui est raccordé à au moins un autre appareil de commande du véhicule.

6. Dispositif d'alimentation en tension d'un véhicule automobile selon l'une des revendications 1 à 3, **caractérisé en ce que** le commutateur semi-conducteur (11) et le relais (R1, r1) forment un étage final de puissance qui est commandé par un moyen externe de commande, en particulier un appareil de commande du moteur.

7. Dispositif d'alimentation en tension d'un véhicule automobile selon la revendication 6, **caractérisé en ce qu'**une adaptation de niveau (23) est associée au commutateur semi-conducteur (11) et agit sur le potentiel aux bornes de grille du commutateur semi-conducteur (11) et au point de raccordement entre le commutateur semi-conducteur et le relais (R1, r1).

8. Dispositif d'alimentation en tension d'un véhicule automobile selon l'une des revendications précédentes, **caractérisé en ce que** le dimensionnement du commutateur semi-conducteur (11) est effectué de telle sorte qu'il puisse reprendre pendant une durée prédéterminée la totalité du courant d'alimentation des consommateurs (15) intervenant dans le démarrage.

9. Dispositif d'alimentation en tension d'un véhicule automobile selon l'une des revendications précédentes, **caractérisé en ce que** l'étage final de puissance comprenant le commutateur (11), le relais (R1, r1) et éventuellement le convertisseur de tension continue est englobé dans un boîtier commun qui présente plusieurs bornes de raccordement pour l'alimentation en tension et l'apport ou la réception de signaux de commande.
